Europäisches Patentamt

European Patent Office

Office européen des brevets

(11) Veröffentlichungsnummer : **0 033 365**
**B1**

# (12) EUROPÄISCHE PATENTSCHRIFT

(45) Veröffentlichungstag der Patentschrift :
21.03.84

(21) Anmeldenummer : 80107044.2

(22) Anmeldetag : 14.11.80

(51) Int. Cl.³ : **C 08 F279/02** // (C08F279/02, 220/12, 212/08)

(54) **Verfahren zur Herstellung schlagzäher Formmassen.**

(30) Priorität : 24.01.80 DE 3002394

(43) Veröffentlichungstag der Anmeldung :
12.08.81 Patentblatt 81/32

(45) Bekanntmachung des Hinweises auf die Patenterteilung : 21.03.84 Patentblatt 84/12

(84) Benannte Vertragsstaaten :
DE FR GB IT

(56) Entgegenhaltungen :
DE-A- 2 218 191
FR-A- 1 526 993
FR-A- 1 579 430
FR-A- 2 348 234
US-A- 3 178 489
CHEMICAL ABSTRACTS, Band 73, Nr. 24, 14. Dezember 1970, Seite 21, Nr. 121170w Columbus, Ohio, U.S.A.
CHEMICAL ABSTRACTS, Band 81, Nr. 26, 30. Dezember 1974, Seite 48, Nr. 170524p Columbus, Ohio, U.S.A.
CHEMICAL ABSTRACTS, Band 73, Nr. 22, 30. November 1970, Seite 25, Nr. 110450m Columbus, Ohio, U.S.A.
Die Akte enthält technische Angaben, die nach dem Eingang der Anmeldung eingereicht wurden und die nicht in dieser Patentschrift enthalten sind.

(73) Patentinhaber : **Röhm GmbH**
**Kirschenallee Postfach 4242**
**D-6100 Darmstadt 1 (DE)**

(72) Erfinder : **Jung, Karl August, Dr.**
**Dresdener Strasse 14**
**6105 Ober-Ramstadt (DE)**
Erfinder : **Munzer, Manfred, Dr.**
**Hunsrückstrasse 15**
**D-6140 Bensheim (DE)**
Erfinder : **Vetter, Heinz, Dr. Ing.**
**Taunusstrasse 92**
**D-6101 Rossdorf (DE)**
Erfinder : **Wunderlich, Winfried, Dr.**
**Spessartring 11**
**D-6101 Rossdorf (DE)**

## Verfahren zur Herstellung schlagzäher Formmassen

Die Erfindung betrifft ein Verfahren zur Herstellung transparenter schlagzäher Formmassen auf der Basis von Terpolymeren aus Methylmethacrylat/Styrol/Alkylacrylat im Gemisch mit gepfropften Butadien. Formmassen auf der Grundlage von Methylmethacrylat-Styrol-Copolymeren abgemischt mit einem gepfropften Polybutadien sind seit längerem bekannt. So werden in der BE-PS 640 832 Emulsionspolymerisate aus Styrol und Acrylat- und/oder Methacrylatmonomeren (z. B. Methylmethacrylat, Äthylacrylat und Styrol) und einem Polybutadien-Styrol-Latex beschrieben, wobei der Brechungsindex des Acrylat- bzw. Methacrylatcopolymerisats dem des Latex angeglichen sein soll. In der DE-AS 1 222 251 werden Formmassen, bestehend aus Polymethylmethacrylat (PMMA) bzw. Copolymerisaten aus mindestens 40 % Methylmethacrylat und/oder Styrol beansprucht.

In der US-PS 2 857 360 wird eine Formmasse, bestehend zu 85-65 Gew.-% aus Vertretern einer Klasse gebildet aus Methylmethacrylat und Gemischen von mindestens 55 Gew.-% Methylmethacrylat mit einem anderen vinylischen Monomeren, die in innigem Kontakt mit einem zu 50-90 Gew.-% aus Butadien bestehenden Butadien-Styrol-Latex polymerisiert wurden, beschrieben. Als Comonomeres des Methylmethacrylats wird u. a. Äthylacrylat genannt.

Weiter lehrt die DE-AS 1 255 304 Formmassen auf der Basis von 1-20 Gew.-% Polybutadien mit 80-99 Gew.-% eines Copolymeren aus wenigstens einem Vinylaromaten und einem (Meth)-acrylester. Bekannt sind ferner aus der US-PS 3 868 434 formbare monovinylaromatische Polymere, hergestellt durch Polymerisation mindestens eines vinylaromatischem Monomeren sowie 0-30 Gew. eines Comonomeren wie Acryl- bzw. Methacrylester und 1,4-Polybutadien-Kautschuk, wobei der Kautschuk im Monomeren gelöst wird und freiradikalisch in Masse unter Rühren, bis zum Ende polymerisiert wird. Der Anteil des Kautschuks soll 1-20 Gew.-%, bezogen auf das Gesamtpolymere, betragen.

Ein zweistufiges Pfropfpolymerisationsverfahren, bei dem in erster Stufe ein monovinylaromatisches Monomeres unter Bewegung in Gegenwart eines darin gelösten Kautschuks vorpolymerisiert wird bis die ganze Kautschukphase aus der Lösung austritt und die Kautschukteilchen eine durchschnittliche Größe von mindestens 0,5 und weniger als 10 Mikron besitzen und daran anschließend bis zum gewünschten Umsatz weiterpolymerisiert wird, ist Gegenstand der DE-OS 1 595 203.

In der DE-AS 1 595 210 wird ein Verfahren zur Herstellung kautschukmodifizierter Polymerisate beschrieben, bei dem eine Lösung eines linearen Polybutadiens in einem monovinylaromatischen Kohlenwasserstoff gegebenenfalls in Anwesenheit von Acrylnitril oder Methylmethacrylat und in Gegenwart eines Alkylmercaptans mit 6-24 C-Atomen als Kettenregler bis zu einer Umwandlung von ca. 10-45 % vorpolymerisiert und dann das Reaktionsgemisch einer zweiten Polymerisationsstufe bis zur im wesentlichen vollständigen Polymerisation unterworfen wird, wobei der Kettenregler in 2-4 gesonderten Anteilen zugesetzt wird.

Aus der Beschreibung geht hervor, daß das beanspruchte Verfahren auf dem Hintergrund der Herstellung von Terpolymeren, speziell des ABS-Typs zu sehen ist.

Aus der Beschreibung geht hervor, daß das beanspruchte Verfahren zu verbesserten Schmelzflußeigenschaften der Verfahrensprodukte (Kautschukmodifiziertes Styrol bzw. ABS-Polymere) ohne Beeinträchtigung der Schlagzähigkeit führt, allerdings nur, wenn Polybutadien-Kautschuk, nicht jedoch Styrol-Butadien-Kautschuk eingesetzt wird. Hinsichtlich des Mercaptanzusatzes wird gelehrt, daß die genauen Zeiten und Stellen vom gewählten Verfahren und den gewünschten Eigenschaften des Produkts abhängen. Die Vorpolymerisationsstufe wird bis zu einem Umwandlungsgrad von vorzugsweise 15-35 % geführt. In der anschließenden zweiten Polymerisationsstufe soll in Abwesenheit von Scherung oder Bewegung polymerisiert werden.

Die DE-OS 28 20 977 lehrt Formmassen auf Acrylbasis, die (A) aus etwa 70-95 % eines harzartigen Terpolymeren aus etwa 65-75 Teilen Methylmethacrylat, 18-24 Teilen Styrol und etwa 2-12 Teilen Äthylacrylat sowie (B) aus etwa 5-30 % Polybutadien, das mit 17-22 Teilen Methylmethacrylat, 4-7 Teilen Styrol und 0-3 Teilen Äthylacrylat gepfropft ist, wobei das Verhältnis von Polybutadien zu Monomer in der Komponente (B) etwa 1 : 1 bis 4 : 1 beträgt, bestehen.

In der DE-AS 2 218 191 wird ein Verfahren zur Herstellung transparenter, kautschukmodifizierter Kunststoffe angegeben, welches dadurch gekennzeichnet ist, daß man in der ersten Stufe ohne Kettenüberträger bis zu einem Vinylmonomerenumsatz von 3,5 bis 15 Gew.-% polymerisiert, hier auf den Kettenüberträger zusetzt und bis zu einem Vinylmonomerumsatz von 20-40 Gew.-% in Masse weiterpolymerisiert und anschließend 0,3 bis 3 Gew.-%, bezogen auf die Gesamtmenge der Vinylmonomeren, Lauroylperoxid einsetzt.

Zum gegenwärtigen Zeitpunkt wird in den praktisch durchgeführten Verfahren des Standes der Technik zur Herstellung von Methylmethacrylat-Polybutadien-Styrol-Massen jeweils von einem Kautschuk in Latexform ausgegangen. Bei der Verwendung von Latices wirkt sich deren Wassergehalt beim Transport und bei der Lagerung nachteilig aus. Die Latex-Isolierung kann entweder durch Koagulation erfolgen, die in der Regel jedoch nicht zu 100 % durchzuführen ist und daher zu einer Abwasserbelastung führt, oder man entfernt das Wasser durch Verdampfen, was unweigerlich die Anwesenheit von Fremdbestandteilen aus dem Latex in der schlagzähen Formmasse zur Folge hat.

Diese Fremdbestandteile (Emulgatoren, Zersetzungsprodukte der Initiatorensysteme) können für die weitere Verarbeitung durchaus unerwünscht sein. Formmassen auf Latex-Basis können daber nicht völlig befriedigen. Beispielsweise treten Schwierigkeiten, wie Geruchsbildung, Anfälligkeit gegenüber Haarrißbildung und mangelnde optische Qualität auf.

Die von der Herstellung schlagzähen Polystyrols her bekannte Alternative — nämlich Arbeiten mit Festkautschuk — hatte bisher auf dem Gebiet der Methylmethacrylat-Butadien-Styrol-Polymeren (MBS-Polymere) keinen Eingang finden können, offensichtlich wegen der unterschiedlichen Pfropfbarkeit des Polybutadiens durch das als Hauptmonomeres vorliegende Methylmethacrylat und die damit verbundenen Schwierigkeiten bei der Einstellung der für die angestrebten Produkteigenschaften (vor allem optische Qualität und Zähigkeit) ausschlaggebenden Teilchengröße der Zähphase.

Gerade der kürzlich offenbarte Stand der Technik läßt erkennen, daß es sehr eng gefaßter Verfahrensmerkmale bedarf, um auf diesem Gebiet überhaupt zu verwendungsfähigen Formmassen zu kommen. Das in der DE-AS 2 218 191 als einziger Initiator empfohlene Lauroylperoxid schränkt aufgrund seiner vorgegebenen Zerfallscharakteristika die Auswahl denkbarer Verfahren in entscheidender Weise ein, weil die Verfahrensparameter durch die Wahl des Initiators weitgehend festgelegt sind. In gleichem Sinne einschränkend wirkt sich auch die Bedingung aus, daß bis zu Umsätzen zwischen 3,5 und 15 % in Abwesenheit von Reglern polymerisiert werden muß. Um zu verhindern, daß in diesem Umsatzbereich Polymere mit einem die Verarbeitbarkeit und optische Qualität negativ beeinflußenden, hohen Molekulargewicht entstehen, muß eine Abstimmung von Initiatormenge und Polymerisationstemperatur innerhalb enger Grenzen getroffen werden.

Es bestand daher die Aufgabe, ein allgemein anwendbares Verfahren zur Herstellung von schlagzähen Formmassen mit verbesserten Produktqualitäten, insbesondere geruchsarmen Produkten, welche die optischen Anforderungen erfüllen und zwar ohne Beeinträchtigung ihrer mechanischen Eigenschaften zur Verfügung zu stellen.

Die gestellte Aufgabe wird bei dem Verfahren gemäß dem Oberbegriff des Anspruches erfindungsgemäß dadurch gelöst, daß in einer Folge genau aufeinander abgestimmter Verfahrensmaßnahmen Polybutadien-Festkautschuk in Anteilen von 3-10 Gew.-% in dem Gemisch der Monomeren Methylmethacrylat, Styrol, Methyl- und/oder Äthylacrylat im Gewichtsverhältnis (73 ± 5) : (22 ± 2) : (5 ± 3), wobei das Verhältnis in jedem Falle so gewählt wird, daß der Brechungsindex der resultierenden Hartphase an den des Polybutadiens angeglichen ist, gelöst wird unter Zusatz solcher pfropfaktiver Initiatoren, bei deren Zerfall tert. Butyloxy-bzw. Phenylradikale entstehen und in Anwesenheit von Regler von Anfang an bis zu einem Umsatz, der dem 1-2 fachen Gew.

des eingesetzten Polybutadiens entspricht, polymerisiert und in einer zweiten Stufe, in der Bildung diskreter Zähphasen-Teilchen und Phaseninversion erfolgt (Inversionsstufe), die Polymerisation bis zu einem Umsatz zwischen 25 und 40 % geführt wird und durch Anwendung von Scherkräften, vorzugsweise durch Rühren dafür gesorgt wird, daß die Teilchengröße im wesentlichen zwischen 0,2 und 1,5 $\mu$ gehalten wird und der Ansatz in an sich bekannter Weise der Endpolymerisation unterworfen wird.

Die Herstellung des erfindungsgemäß zu verwendenden Polybutadiens ist an sich bekannt. (Vgl. z. B. US-PS 3 868 434). Besonders geeignet sind beispielsweise 1,4-Poly-Butadiene mit mindestens 25 % cis-Gehalt. Zerkleinern und Lösen des Polybutadien-Fest-kautschuks in den Monomeren bereitet keine prinzipiellen Schwierigkeiten.

Im Unterschied zu einschlägigen Verfahren des Standes der Technik soll darauf verzichtet werden, die Lösung des Kautschuks unter Mitverwendung von Lösungsmitteln wie Toluol vorzunehmen.

Erfindungsgemäß ist dafür Sorge zu tragen, daß innerhalb der beanspruchten Grenzen das Verhältnis der Monomeren so gewählt wird, daß der Brechungsindex der resultierenden Hartphase dem des Polybutadiens angeglichen wird, was sich vom Fachmann in geläufiger Weise ohne besonderen Aufwand erreichen läßt. Als spezifisch geeignet für das erfindungsgemäße Verfahren sind pfropfaktive Initiatoren des Typs erkannt worden, bei deren Zerfall tert. Butyloxy-bzw. Phenylradikale entstehen, d. h. an sich bekannte Radikalbildner, die eine tert. Butylgruppe bzw. eine Gruppe enthalten, die beim Zerfall ein Phenylradikal freisetzt. Es handelt sich dabei im wesentlichen um Peroxy-Verbindungen, wie beispielsweise tert. Butylperneodecanoat und/oder Dibenzoylperoxid und/oder tert. Butylperbenzoat. Der Anteil an pfropfaktiven Initiatoren hält sich in den an sich bekannten Grenzen beispielsweise 0,02 bis 1 Gew.-% bezogen auf die Monomeren.

Auch in den darauffolgenden Verfahrensstufen kann Initiator je nach Bedarf zugesetzt werden. Dies ist vor allem dann erforderlich, wenn, wie bei diskontinuierlicher Verfahrensführung mit Zwischenlagerung der Sirupe, Sorge getragen werden muß, daß der Initiator bei Ende der jeweiligen Polymerisationsstufe vollständig verfallen ist, was bekanntlich nach 10 Halbwertszeiten der Fall ist. Die erforderliche Abstimmung des Initiators auf die Polymerisationstemperatur, die in den beiden ersten Stufen in der Regel im Bereich zwischen 80 und 150 °C liegt, ist auf der Basis eigener Messungen, Angaben von Peroxidherstellern und/oder Literatur (z. B. Polymer Handbook J. Brandrup & E.H. Immergut, Wiley — Interscience 1975) möglich.

Die Dauer der ersten Polymerisationsstufe ergibt sich aus dem Merkmal, daß in dieser Stufe ein Umsatz erreicht werden soll, welcher der 1-2 fachen Menge (Gewicht) des eingesetzten Polybutadiens entspricht.

In dieser ersten Polymerisationsstufe erfolgt eine geregelte Pfropfpolymerisation. Erfindungsgemäß kann weiterer Regler bis einschließlich dem Beginn der Endpolymerisation zugesetzt werden. Dafür geeignete Regler sind bekannt (Vgl. Polymer Handbook, loc., cit.). Als besonders zweckmäßig hat sich die Verwendung von tert. Dodecylmercaptan erwiesen.

Die Gesamtmenge an Regler über alle Stufen hinweg beträgt im allgemeinen 0,2-1,0 Gew.-%, bezogen auf die Monomeren. Die Durchführung des erfindungsgemäßen Verfahrens kann z. B. so erfolgen, daß Polybutadien-Kautschuk zunächst gegebenenfalls zerkleinert und unter Rühren in den Monomeren gelöst wird.

**Ansprüche**

1. Verfahren zur Herstellung von transparenten, schlagzähen Formmassen auf Basis a) einer Zähphase, bestehend aus gepfropftem Polybutadien-Festkautschuk und b) einer Copolymerisat-Hartphase aus den Monomeren Methylmethacrylat, Alkylacrylat und Styrol mittels Polymerisation in mehreren Verfahrensschritten, umfassend in erster Stufe eine Vorpolymerisation der Monomeren in Gegenwart des in den Monomeren gelösten Polybutadien-Festkautschuks und eine Endpolymerisation bis zu einem Umsatz von über 80 % der Monomeren, dadurch gekennzeichnet, daß in erster Stufe der Polybutadien-Festkautschuk in Anteilen von 3-10 Gew.-% in dem Gemisch der Monomeren Methylmethacrylat-Styrol-Methyl- und/oder Äthylacrylat im Gewichtsverhältnis $(73 \pm 5) : (22 \pm 2) : (5 \pm 3)$, wobei das Verhältnis in jedem Falle so gewählt wird, daß der Brechungsindex der resultierenden Hartphase dem des Polybutadiens angeglichen ist, gelöst wird und unter Zusatz solcher pfropfaktiven Initiatoren, bei deren Zerfall tertiäre Butoxy- bzw. Phenylradikale entstehen und in Anwesenheit von Regler von Anfang an bis zu einem Umsatz der Monomeren, der dem 1-2 fachen Gew. des eingesetzten Polybutadiens entspricht, polymerisiert und in einer zweiten Stufe (Inversionsstufe) die Polymerisation bis zu einem Umsatz zwischen 25 und 40 % geführt wird, wobei sich Zähphasen-Teilchen bilden, deren Teilchendurchmesser durch Rühren unter Ausnutzung der Scherkräfte zwischen 0,2 und 1,5 µ gehalten wird und der Ansatz in an sich bekannter Weise der Endpolymerisation unterworfen wird.

2. Verfahren gemäß Anspruch 1, dadurch gekennzeichnet, daß als pfropfaktive Initiatoren in der ersten Stufe tert. Butylperneodecanoat und/oder tert. Butylperbenzoat verwendet werden.

3. Verfahren gemäß Anspruch 1, dadurch gekennzeichnet, daß der Regler in Anteilen bis einschließlich Beginn der Endpolymerisationsstufe zugesetzt wird.

4. Verfahren gemäß Anspruch 3, dadurch gekennzeichnet, daß die Gesamtmenge an zugesetztem Regler 0,2-1,0 %, bezogen auf die Monomeren, ausmacht.

5. Verfahren gemäß den Ansprüchen 1 und 3, dadurch gekennzeichnet, daß als Regler tert. Alkylmercaptan, vorzugsweise tert. Dodecylmercaptan, verwendet wird.

6. Verfahren gemäß Anspruch 2, dadurch gekennzeichnet, daß das Gewitsverhältnis der Monomeren Methylmethacrylat-Styrol-Methyl- und/oder Äthylacrylat 73 : 22 : 5 beträgt.

7. Verfahren gemäß Anspruch 1, dadurch gekennzeichnet, daß Polymerisationstemperatur und Initiator in Jeder Stufe so aufeinander abgestimmt werden, daß jeweils ein vollständiger Zerfall des Initiators gewährleistet ist.

8. Verfahren gemäß den Ansprüchen 1 und 7, dadurch gekennzeichnet, daß die Endpolymerisation bis zu einem Umsatz von annähernd 100 % durchgeführt wird.

**Claims**

1. Process for preparing transparent impact-resistant moulding materials on a base of a) a tough phase consisting of grafted compact polybutadiene rubber and b) a copolymer hard phase composed of the monomers methyl methacrylate, alkyl acrylate and styrene by means of polymerisation in several process steps incorporating in a first step prepolymerisation of the monomers in the presence of the compact polybutadiene rubber dissolved in the monomers and final polymerisation up to a conversion of over 80 % of the monomers, characterised in that in the first step the compact polybutadiene rubber is dissolved in proportions of 3 to 10 % by weight in the mixture of monomers methyl methacrylate-styrene-methyl- and/or ethyl acrylate in a weight ratio of $(73 \pm 5) : (22 \pm 2) : (5 \pm 3)$, the ratio being selected in each case so that the refractive index of the resulting hard phase corresponds to that of the polybutadiene, and, with the addition of those graft-active initiators at the decomposition of which tertiary butoxy or phenyl radicals are obtained, is polymerised in the presence of a controller from the outset onwards up to a conversion of the monomers corresponding to 1 to 2 times the weight of the polybutadiene used, and in a second step (inversion step) polymerisation is carried out up to a conversion rate of 25 and 40 %, there forming tough-phase particles the particle diameter of which is maintained between 0.2 and 1.5 microns by stirring using the shearing forces, and the preparation being subjected to final polymerisation in a way known *per se*.

2. Process according to Claim 1, characterised in that tertiary butyl perneodecanoate and/or tertiary butyl perbenzoate are used in the first step as graft-active initiators.

3. Process according to Claim 1, characterised in that the controller is added in portions up to and including the start of the final polymerisation step.

4. Process according to Claim 3, characterised in that the total quantity of controller added amounts to 0.2 to 1.0 % relative to the monomers.

5. Process according to Claims 1 and 3, characterised in that tertiary alkylmercaptan, preferably tertiary dodecylmercaptan, is used as a controller.

6. Process according to Claim 2, characterised in that the weight ratio of the monomers methyl methacrylate-styrene-methyl- and/or ethyl acrylate is 73 : 22 : 5.

7. Process according to Claim 1, characterised in that the polymerisation temperature and the initiator are coordinated with one another in each step in such a way that complete decomposition of the initiator is guaranteed in every case.

8. Process according to Claims 1 and 7, characterised in that final polymerisation is carried out up to a conversion rate of approximately 100 %.

## Revendications

1. Procédé pour la préparation de matières à mouler transparentes et résilientes, à base (a) d'une phase visqueuse composée de caoutchouc solide de polybutadiène greffé et (b) d'une phase dure d'un produit de la polymérisation des monomères méthacrylate de méthyle, acrylate d'alcoyle et styrène, par polymérisation en plusieurs étapes, comprenant dans une première étape une pré-polymérisation des monomères en présence du caoutchouc solide de polybutadiène dissous dans les monomères et une polymérisation finale jusqu'à un degré de transformation de plus de 80 % des monomères, caractérisé en ce que dans la première étape, le caoutchouc solide de polybutadiène est dissous dans des proportions de 2 à 10 % en poids dans le mélange des monomères méthacrylate de méthyle-styrène-acrylate de méthyle et/ou d'éthyle dans le rapport de poids (73 ± 5) : (22 ± 2) : (5 ± 3), le rapport étant choisi dans chaque cas de telle manière que l'indice de réfraction de la phase dure résultante soit en harmonie avec celui du polybutadiène et la polymérisation est effectuée avec addition d'initiateurs à activité de greffage dont la décomposition donne des radicaux tertiobutoxy ou phényle et en présence de régulateurs depuis le début, jusqu'à un degré de transformation qui correspond à 1-2 fois le poids du polybutadiène utilisé, puis, dans une seconde étape (étape d'inversion), la polymérisation est menée jusqu'à un degré de transformation compris entre 25 et 40 % et, dans ces conditions, il se forme des particules de phase visqueuse dont le diamètre est maintenu entre 0,2 et 1,5 micron par application de forces de cisaillement et la charge est soumise, de façon connue en soi, à la polymérisation finale.

2. Procédé selon la revendication 1, caractérisé en ce qu'on utilise, comme initiateurs à activité de greffage dans la première étape, le pernéodécanoate de butyle tertiaire et/ou le perbenzoate de butyle tertiaire.

3. Procédé selon la revendication 1, caractérisé en ce que le régulateur est ajouté par portions jusque et y compris le début de l'étape de polymérisation finale.

4. Procédé selon la revendication 3, caractérisé en ce que la quantité totale de régulateur ajouté s'élève à 0,2-1,0 % par rapport aux monomères.

5. Procédé selon la revendication 1 ou 3, caractérisé en ce qu'on utilise, comme régulateur, un tertioalcoylmercaptan, de préférence le tertiododécylmercaptan.

6. Procédé selon la revendication 2, caractérisé en ce que le rapport de poids des monomères méthacrylate de méthyle-styrène-acrylate de méthyle et/ou d'éthyle est de 73 : 22 : 5.

7. Procédé selon la revendication 1, caractérisé en ce que dans chaque étape, la température de polymérisation et l'initiateur sont adaptés l'un à l'autre de telle manière qu'on soit assuré chaque fois d'une décomposition complète de l'initiateur.

8. Procédé selon la revendication 1 ou 7, caractérisé en ce que la polymérisation finale est menée jusqu'à un degré de transformation de 100 % approximativement.